# EUROPÄISCHE PATENTSCHRIFT

(11) **EP 1 231 099 B1**
(45) Veröffentlichungstag und Bekanntmachung des Hinweises auf die Patenterteilung: **18.01.2006**
(21) Anmeldenummer: 01126341.5
(22) Anmeldetag: 07.11.2001
(51) Int. Cl.: B60N 2/02, B60R 16/02, H01F 38/14

(54) **Anordnung zur Übertragung von Energie und/oder Daten zwischen Fahrzeugkarosserie und einem herausnehmbaren Teil**
Method for transmitting power and/or data between a vehicle body and a removable element
Procédé de transmission d'énergie et/ou de données entre une carrosserie automobile et un élément amovible

(30) Priorität: 10.02.2001 DE 10106173
(43) Veröffentlichungstag der Anmeldung: 14.08.2002
(73) Patentinhaber: ROBERT BOSCH GMBH, 70442 Stuttgart (DE)
(72) Erfinder: Guettler, Hans, 74199 Untergruppenbach (DE)

(56) Entgegenhaltungen:
- DE-A- 10 020 949
- DE-A- 19 545 220
- DE-C- 19 743 313

## Beschreibung

### Stand der Technik

Die Erfindung geht aus von einer Anordnung zur Übertragung von Energie und/oder Daten zwischen Fahrzeugkarosserie und einem herausnehmbaren Teil nach der Gattung des unabhängigen Patentanspruchs (s. zum Beispiel DE-A-195 45 220).

Es ist bereits bekannt, zur drahtlosen Energie- und Datenübertragung zwischen der Fahrzeugkarosserie und einem herausnehmbaren Teil, beispielsweise einem Fahrzeugsitz, Übertrager zu verwenden. Dazu werden insbesondere induktive Übertrager verwendet, wobei sich Wicklungen jeweils an der Primärseite und an der Sekundärseite auf einem Eisenkern befinden. Die Kernhälften liegen flach aneinander an. Durch den Luftspalt ist es notwendig, um Eisenverluste zu vermeiden, ein entsprechendes Kernmaterial zu verwenden, beispielsweise das unter dem Handelsnamen bekannte SOMALLOY, das aus 95% Eisenpulver besteht und in Kunststoff Polyamid gebunden ist.

Aus der o.g. DE-A-195 45 220 ist bereits eine Anordnung zum kontaktlosen Übertragen von Signalen zwischen gegeneinander linearen bewegbaren Fahrzeugteilen bekannt. Dabei weist eine Kernhälfte einen Stift auf, der in die zweite Kernhälfte hineinragt.

### Vorteile der Erfindung

Die erfindungsgemäße Anordnung zur Übertragung von Energie und/oder Daten zwischen Fahrzeugkarosserie und einem herausnehmbaren Teil mit den Merkmalen des unabhängigen Patentanspruchs hat, u.e. den Vorteil, dass eine der Kernhälften so ausgebildet ist, dass sie wenigstens einen Stift aufweist, der in die zweite Kernhälfte hineinragt. Damit wird erreicht, dass der magnetische Fluß erhöht wird. Darüber hinaus reduziert sich der Luftspalt. Auch dies führt zu einer Verbesserung des magnetischen Flusses.

Erfindungsgemäß und dem o.g. gattungsbildenden Stand der Technik gegenüber weist die Kernhälfte mit dem wenigstens einen Stift einen Ring mit einer Feder auf, der durch die Feder in eingebautem Zustand gegen die zweite Kernhälfte gedrückt wird. Im getrennten Zustand entspannt sich die Feder so, dass sie bündig mit den nach außen gewandten Stiftflächen des wenigstens einen Stifts abschließt, so dass der wenigstens eine Stift nicht herausragt.

Durch die in den abhängigen Ansprüchen aufgeführten Maßnahmen und Weiterbildungen sind vorteilhafte Verbesserungen der im unabhängigen Patentanspruch angegebenen Anordnungen zur Übertragung von Energie und/oder Daten zwischen Fahrzeugkarosserie und einem herausnehmbaren Teil möglich.

Darüber hinaus ist es von Vorteil, dass wenigstens eine Wicklung auf der Primärseite und der Sekundärseite jeweils für die Energie- und Datenübertragung genutzt wird.

Weiterhin ist es von Vorteil, dass der Ring und die Feder vorwiegend aus Kunststoff bestehen und die Kernhälften vorwiegend aus einem Eisenmaterial, da die Eisenverluste durch die Ausbildung des Stiftes die Verwendung dieses Eisenmaterials erlauben und somit sich somit ein dichteres magnetisches Feld zwischen den Kernhälften ausbilden kann. Die Übertragungsverluste werden damit geringer, und man erhält die Möglichkeit, auch ein mechanisch robusteres Kernmaterial einzusetzen.

### Zeichnung

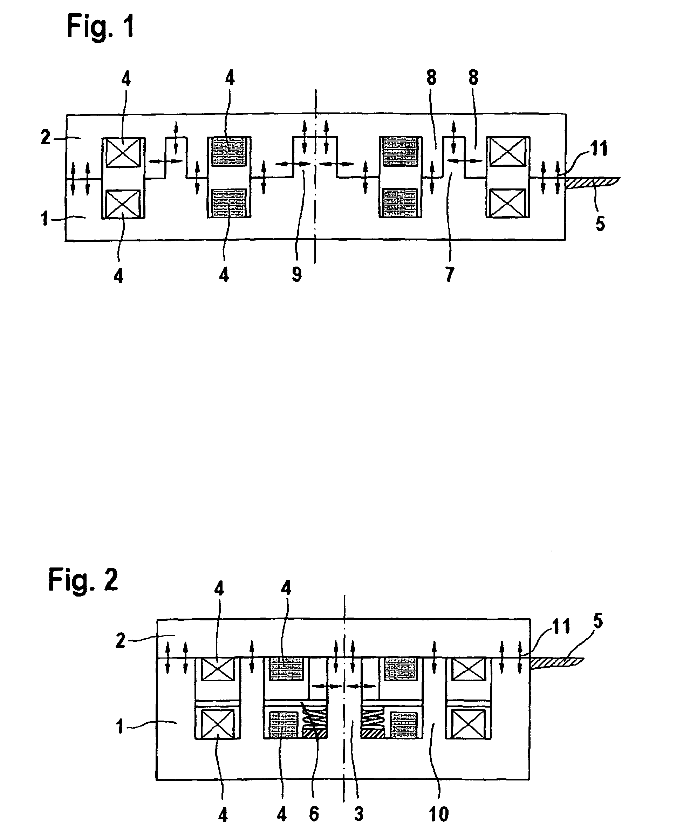

Ausführungsbeispiele der Erfindung sind in der Zeichnung dargestellt und werden in der nachfolgenden Beschreibung näher erläutert. Es zeigt Figur 1 eine schematische Darstellung eines induktiven Übertragers mit Stift und Schulter sowie eines Stiftkerns mit Schulter, wobei dieser Übertrager nicht zur Erfindung gehört und Figur 2 eine zweite schematische Darstellung eines Übertragers mit Stift, wobei die Primärseite einen Ring mit Feder aufweist.

### Beschreibung

Durch die zunehmende Verbreitung von Fahrzeugen, bei denen die Sitze einfach herausnehmbar sein sollen, beispielsweise den beliebten Sport Utility Vehicles (SUV's) und Transportern, ist es notwendig, die elektrische Verbindung von in einem Sitz eingebauten elektrischen und elektronischen Geräten für einen häufigen Ein- und Ausbau auszubilden. Durch die Verwendung von induktiven Übertragern wird eine mechanisch sichere Lösung eingesetzt. Erfindungsgemäß weist nun eine Kernhälfte des induktiven Übertragers einen Stift auf, der in die andere Kernhälfte hineinragt. Damit wird der magnetische Fluß verbessert. Außerdem ermöglicht dies, ein Eisenmaterial mit einer höheren Permeabilität zu verwenden. Weiterhin kann dieses Kernmaterial kostengünstiger und mechanisch robuster ausgeführt sein.

Hier wird unter Stift und Stiftring ein äquivalenter Begriff verstanden, da die Verwendung eines Stiftrings zur Trennung der Spulen für die Energie- und Datenübertragung bei den hier dargestellten rotationssymmetrischen Übertragern notwendig ist.

In Figur 1 ist nun eine erste schematische Darstellung eines induktiven Übertragers mit Stift dargestellt. Eine primärseitige Kernhälfte 1, die sich auf der Fahrzeugkarosserieseite befindet, weist einen Stift mit Schulter 9 und einen Stiftring mit Schulter 7 auf, die jeweils in eine sekundärseitige Kernhälfte 2, die sich in einem herausnehmbaren Teil des Fahrzeugs befindet, hineinragen. Ein Schenkelring der sekundärseitigen Kernhälfte umgibt den Stift mit Schulter 9. Eine Markierung für den Fahrzeugboden 5 zeigt an, dass der Stift mit Schulter 7 und der Stiftring 9 über diesen Fahrzeugboden 5 hinausragen. Sowohl die primärseitige Kernhälfte 1 als auch die sekundärseitige Kernhälfte 2 weisen Wicklungspaare 4 auf. Dabei stellen die ausgefüllten Quadrate die Wicklungen für die Energieübertragungen dar, im folgenden als Powerwicklung bezeichnet, und die Quadrate mit dem Andreaskreuz die Wicklungen für die Datenübertragung, im folgenden mit Datenwicklung bezeichnet.

Dabei ist es so, dass die Powerwicklung magnetisch durch den Stiftring mit Schulter 7 von der Datenwicklung getrennt ist. Die magnetischen Feldlinien sind durch Pfeile dargestellt.

Durch den Stift mit Schulter 9 und den Stiftring mit Schulter 7 wird nun der magnetische Fluß, d.h. die übertragung und induktive Kopplung, verbessert. Der magnetische Fluß wird durch die Doppelpfeile mit dem Bezugszeichen 11 dargestellt.

Der in Fig. 1 dargestellte Schalenkern ist hier rotationssymmetrisch ausgeführt. Es ist alternativ möglich, den Übertrager auch rechtwinklig oder quadratisch vorzusehen.

In Figur 2 ist eine zweite schematische Darstellung eines induktiven Übertragers in einem Fahrzeug dargestellt. Die primärseitige Kernhälfte 1 weist wiederum einen Stift 3 auf, der von einem Schenkelring der sekundärseitigen Kernhälfte 2 umgeben.ist. Ein Ring mit Zinnen 10 trennt die Wicklungspaare wie in Fig. 1 magnetisch voneinander und bewirkt einen guten magnetischen Fluß von der Kernhälfte 1 zu der Kernhälfte 2. Hier ist nun der Fahrzeugboden 5 abschließend mit der nach außen gehenden Stirnhälfte des Stifts 3 und Zinnenflächen des Rings 10 bündig ausgeführt. Zusätzlich ist hier jedoch ein Kunststoffring auf einer Kunststoffringfeder 6 primärseitig angebracht. Im eingebauten Zustand drücken die Kunststoffringfeder 6 den Kunststoffring gegen die sekundärseitige Kernhälfte 2 und zwar gegen den Schenkelring, der den Stift 3 umgibt. Im getrennten Zustand, d.h., wenn das bewegliche Teil, beispielsweise der Fahrzeugsitz ausgebaut ist, wird sich jedoch die Kunststoffringfeder so entspannen, dass der Kunststoffring 6 bündig mit der nach außen gehenden Stirnfläche des Stifts 3 abschließt. Der Kunststoffring 6 ist mit Bohrungen versehen, durch die die Zinnen des Rings 10 hindurchragen. Damit liegt dann ein flacher Fahrzeugboden 5 vor. Mit dem Bezugszeichen 11 ist wiederum der magnetische Fluß gekennzeichnet.

Es ist weiterhin möglich, dass mehr oder weniger Wicklungen primär- und sekundärseitig vorhanden sind. Das Material des Kerns ist hier Eisen mit einer relativen Permeabilität von über 2000.

Ist ein Übertragereinbau jedoch auch seitlich am Tunnel möglich, könnte unter Umständen auch ein 1 cm langer und ca. 1 cm dicker Stift und ein umlaufender Stiftring ca. 0,5cm dick aus der Tunnelseitenwand herausschauen, da darauf keine Lasten abgelegt werden. Dadurch würde die Stiftübertragerkonstruktion kostengünstiger möglich.

## Patentansprüche

1. Anordnung zur Übertragung von Energie und/oder Daten zwischen Fahrzeugkarosserie und einem herausnehmbaren Teil, wobei die Anordnung einen induktiven Übertrager mit wenigstens einer ersten Wicklung auf der Fahrzeugkarosserieseite als der Primärseite und wenigstens einer zweiten Wicklung (4) am herausnehmbaren Teil als Sekundärseite aufweist, wobei sich die Wicklungen (4) jeweils auf einer Kernhälfte (1,2) befinden, wobei die erste Kernhälfte (1) wenigstens einen Stift (3) aufweist, der in die zweite Kernhälfte (2) hineinragt, **dadurch gekennzeichnet, dass** an der ersten Kernhälfte (1) ein Ring (6) mit einer Feder vorhanden ist, wobei die Feder den Ring (6) gegen die zweite Kernhälfte (2) im eingebauten Zustand drückt und im getrennten Zustand sich so entspannt, dass der Ring (6) mit der nach außen gewandten, wenigstens einen Stiftfläche bündig abschließt.

2. Anordnung nach Anspruch 1, **dadurch gekennzeichnet, dass** sowohl primärseitig als auch sekundärseitig jeweils wenigstens eine Wicklung (4) für die Daten- und Energieübertragung vorhanden ist.

3. Anordnung nach Anspruch 1 oder 2, **dadurch gekennzeichnet, dass** der Ring (6) und die Feder vorwiegend aus Kunststoff bestehen.

4. Anordnung nach Anspruch 1, **dadurch gekennzeichnet, dass** der Ring Bohrungen für den wenigstens einen Stift aufweist.

5. Anordnung nach einem der vorhergehenden Ansprüche, **dadurch gekennzeichnet, dass** die Kernhälften (1, 2) vorwiegend aus einem Eisenmaterial bestehen.

## Claims

1. Arrangement for transmission of power and/or data between vehicle bodywork and a removable part, with the arrangement having an inductive transformer with at least one first winding on the vehicle bodywork side as the primary, and with at least one second winding (4) on the removable part as the secondary, with the windings (4) each being located on one core half (1, 2), with the first core half (1) having at least one pin (3) which projects into the second core half (2), **characterized in that** there is a ring (6) with a spring on the first core half (1), with the spring pushing the ring (6) against the second core half (2) in the installed state and reducing the stress in the disconnected state such that the ring (6) terminates flush with the at least one pin surface which faces outwards.

2. Arrangement according to Claim 1, **characterized in that** at least one winding (4) for data transmission and power transmission is provided in each case both on the primary side and on the secondary side.

3. Arrangement according to Claim 1 or 2, **characterized in that** the ring (6) and the spring are composed predominantly of plastic.

4. Arrangement according to Claim 1, **characterized in that** the ring has holes for the at least one pin.

5. Arrangement according to one of the preceding claims, **characterized in that** the core halves (1, 2) are composed predominantly of an iron material.

## Revendications

1. Système pour transmettre de l'énergie et/ou des données entre une carrosserie de véhicule et une pièce amovible, ce système comportant un transmetteur inductif muni d'au moins un premier enroulement sur le côté de la carrosserie de véhicule pour servir de côté primaire et d'au moins un deuxième enroulement (4) sur la pièce amovible pour servir d'enroulement secondaire, chacun des enroulements (4) se trouvant sur une moitié de noyau (1, 2) et la première moitié de noyau (1) comportant au moins une tige (3) qui dépasse dans la deuxième moitié de noyau (2),
**caractérisé en ce que**
une bague (6) munie d'un ressort se trouve sur la première moitié de noyau (1), le ressort à l'état monté pousse la bague (6) contre la deuxième moitié de noyau (2) et à l'état séparé se détend de telle manière que la bague (6) termine en affleurant l'au moins une surface de tige tournée vers l'extérieur.

2. Système selon la revendication 1,
**caractérisé en ce que**
pour transmettre les données et l'énergie, il y a respectivement au moins un enroulement (4) aussi bien côté primaire que côté secondaire.

3. Système selon la revendication 1 ou 2,
**caractérisé en ce que**
la bague (6) et le ressort sont principalement en matière plastique.

4. Système selon la revendication 1,
**caractérisé en ce que**
la bague présente des perçages pour l'au moins une tige.

5. Système selon l'une des revendications précédentes,
**caractérisé en ce que**
les moitiés de noyau (1, 2) sont principalement en un matériau contenant du fer.
